# EUROPEAN PATENT APPLICATION

(11) **EP 3 142 046 A1**
(43) Date of publication of application: **15.03.2017**
(21) Application number: 16186471.5
(22) Date of filing: 31.08.2016
(51) Int. Cl.: G06K 13/08

(54) **SIM CARD CONNECTOR WITH INTEGRATED EJECTION MECHANISM**

(30) Priority: 08.09.2015 US 201562215606 P; 28.01.2016 US 201615009767
(71) Applicant: Apple Inc., Cupertino, CA 95014 (US)
(72) Inventor: DO, Trent K., Cupertino, CA, 95014 (US); SLOEY, Jason S., Cupertino, CA, 95014 (US)
(74) Representative: Lang, Johannes

(57) **Abstract**

A SIM card connector has an integrated SIM card tray ejection mechanism. The ejection mechanism is contained within the connector and includes a pushrod that is disposed in a slot adjacent a SIM card tray cavity. The pushrod is configured to apply a force against an ejector arm when the ejection mechanism is activated. In response, the ejector arm rotates about a pivot and applies an ejection force to the SIM card tray causing the tray to eject from the cavity.

## Description

### CROSS REFERENCE TO RELATED APPLICATIONS

This application claims priority to Provisional Application No. 62/215,606, filed September 08, 2015, titled "SIM CARD CONNECTOR WITH INTEGRATED EJECTION MECHANISM", which is hereby incorporated by reference in its entirety for all purposes.

### FIELD

The described embodiments relate generally to SIM card connectors that are contained within the housing of an electronic device such as a mobile telephony device.

### BACKGROUND

Currently there are a wide variety of electronic devices that function as a mobile telephonic devices. Such electronic devices may include a subscriber identity module (SIM) card that is used to identify and authenticate subscribers on a cellular telephone system. The SIM card may be configured to be accessible by a user so the user can change cellular providers, the phone number assigned to the electronic device or perform other system configuration changes by installing a different SIM card.

In some electronic devices the SIM card may be held in a tray and may be accessible from an outside surface of the electronic device to make it available to the user. In such applications it may be desirable to have the SIM card connector to be compact so it does not require a large penetration aperture through the exterior shell of the electronic device. In addition, it may be beneficial for the SIM card connector to be configured to impede moisture ingression into the electronic device to protect the internal components from damage.

New SIM card connectors may require new features or new methods of implementing the connectors to reduce the size of the penetration aperture through the shell of the electronic device and to improve the ability of the electronic device to impede moisture ingression.

### SUMMARY

Some embodiments of the present invention relate to SIM card connectors that have integrated SIM card ejection mechanisms. The SIM card connector may have a plastic connector base that has a recess sized to receive a SIM card or a SIM card tray through a receiving opening at the front of the connector base. A slot may be disposed in the connector base adjacent to the recess and a pushrod may be disposed in the slot such that it can be linearly translated. An ejector arm may be pivotably coupled to the connector base and configured to be rotated when the pushrod is linearly translated towards the back of the connector. The ejector arm may then rotate and push against the SIM card or the SIM card tray and cause it to be ejected. A cover may be disposed over the connector base, creating a cavity for the SIM card, or the SIM card tray, and may also secure the pushrod and the ejector arm in place.

In some embodiments the SIM card connector may be configured to impede moisture ingression into the electronic device and a gasket may be installed between the SIM card connector and a housing of the electronic device.

In some embodiments a SIM card connector comprises a connector base having a bottom surface, first and second opposing sidewalls, a rear wall extending between the first and second opposing sidewalls, and a rear wall extending from the bottom surface define a recess. A cover is coupled to the connector base and disposed over the recess thereby defining a receiving opening sized and shaped to receive a SIM card. A plurality of electrical contacts are configured to make electrical contact with the SIM card. A slot is disposed adjacent to and along a portion of the first sidewall and a pushrod is disposed within the slot. An ejector arm is pivotably coupled to the connector base and configured to be actuated by the pushrod to eject the SIM card.

In some embodiments the SIM card is held within a tray that is received through the receiving opening and into the recess. The SIM card has a plurality of card contacts that are configured to be coupled to the plurality of electrical contacts when the tray is in a latched position within the recess.

In some embodiments the plurality of electrical contacts have a first end configured to make contact with the SIM card and a second end configured to couple to a circuit board. The pushrod has a head portion disposed adjacent the receiving opening and a contact portion disposed at an opposite end and configured to contact the ejector arm. In various embodiments the pushrod is made with a metal injection molding process.

In some embodiments the front face of the connector is configured to mate to a housing of an electronic device with a gasket such that a seal is formed between the connector and the housing of the electronic device. In various embodiments the cover has spring arm configured to hold the pushrod in the slot. In some embodiments the cover has one or more depressions to hold the ejector arm on the pin.

In some embodiments an integrated electrical connector assembly for forming electrical connections to a card comprises a connector enclosure having a receiving opening that communicates with a cavity formed to receive a tray configured to hold the card. A plurality of electrical contacts are configured to make a plurality of electrical connections between the card and an external circuit board and a pushrod is disposed adjacent to the cavity and is configured to linearly translate parallel to the cavity. An ejector arm is disposed within the housing and configured to work in conjunction with the pushrod such that when the pushrod is translated in a first direction it contacts the ejector arm causing the ejector arm to rotate and eject the card out of the receiving opening.

In some embodiments the card is a SIM card that is held within a tray that is received within the cavity. In various embodiments the pushrod has an enlarged head portion with a depression. In some embodiments the ejector arm has a pushrod contact portion opposite a tray ejector portion and a hole disposed in-between, the hole configured to pivotably couple the ejector arm to the connector enclosure. In various embodiments the connector enclosure is configured to mate to a housing of an electronic device with a gasket such that a seal is formed between the connector and the housing of the electronic device.

In some embodiments a SIM card connector comprises a connector enclosure having a receiving opening that communicates with a cavity formed to receive a tray and a latch within the connector enclosure is configured to secure the tray within the cavity when in a latched position. A plurality of electrical contacts are disposed within the cavity and are configured to make contact with a plurality of SIM card contacts when a SIM card is in the tray and the tray is in the latched position. A tray ejection mechanism is contained within the connector enclosure and is configured to eject the tray when actuated causing the tray to protrude out of the receiving opening.

In some embodiments the tray ejection mechanism comprises a pushrod disposed in a slot that is parallel with the cavity and an ejector arm that is pivotably coupled to the connector enclosure such that when the pushrod is linearly translated in a first direction the pushrod hits the ejection arm causing the tray to be ejected. In various embodiments the tray has a faceplate with an aperture and the pushrod is linearly translated by inserting a tool through the aperture.

In some embodiments the faceplate forms a portion of an exterior surface of an electronic device and the latch protrudes from a sidewall of the cavity and secures the tray by fitting within a depression within the tray. In various embodiments the connector enclosure is configured to be secured to a housing of an electronic device with a gasket.

To better understand the nature and advantages of the present invention, reference should be made to the following description and the accompanying figures. It is to be understood, however, that each of the figures is provided for the purpose of illustration only and is not intended as a definition of the limits of the scope of the present invention. Also, as a general rule, and unless it is evident to the contrary from the description, where elements in different figures use identical reference numbers, the elements are generally either identical or at least similar in function or purpose.

### BRIEF DESCRIPTION OF THE DRAWINGS

FIG. 1 is a front perspective view of an electronic device that incorporates a SIM card connector according to an embodiment of the invention;
FIG. 2 is an exploded view of the SIM card connector shown in FIG. 1;
FIG. 3 is cross-sectional view of the electronic device illustrated in FIG. 1 in the region of the SIM card connector with portions of the SIM card connector hidden and the SIM card tray illustrated in the installed position; and
FIG. 4 is the same cross-sectional view illustrated in FIG. 3 with the SIM card tray illustrated in the ejected position.

### DETAILED DESCRIPTION

Some embodiments of the present invention relate to SIM card connectors and methods of employing such connectors in electronic devices. Some embodiments relate to SIM card connectors having a SIM card tray ejection mechanism integrated entirely within the SIM card connector such that the connector requires a relatively small penetration aperture through the housing of the electronic device which maximizes the strength of the housing. In addition, the integrated ejection mechanism may enable the SIM card connector to be formed such that it is substantially liquid-tight. The SIM card connector may be sealed with a gasket to the housing of the electronic device so the electronic device can be protected from moisture ingression through the SIM card connector. While the present invention can be useful for a wide variety of configurations, some embodiments of the invention are particularly useful for SIM card connectors with integrated SIM card ejection mechanisms, as described in more detail below.

For example, in some embodiments an injection molded plastic connector base may have a recess sized to receive a SIM card or a SIM card tray through a receiving opening at the front of the connector base. A slot may be disposed in the connector base adjacent to the recess and a pushrod may be disposed in the slot such that it can be linearly translated. An ejector arm may be pivotably coupled to the connector base and configured to be rotated when the pushrod is linearly translated towards the back of the connector. The ejector arm may then rotate and push against the SIM card or the SIM card tray and cause it to be ejected. A metallic cover may be disposed over the connector base, creating a cavity for the SIM card, or the SIM card tray and securing the pushrod and the ejector arm in place. Therefore, the complete ejection system may be integrated within the SIM card connector. This configuration may remove the need for external ejection mechanism components that may need additional space within the electronic device housing or that may make it impractical to seal the SIM card connector to the housing to form a liquid-tight seal.

In order to better appreciate the features and aspects of SIM card connectors for electronic devices according to the present invention, further context for the invention is provided in the following section by discussing one particular implementation of a SIM card connector according to embodiments of the present invention. These embodiments are for example only and other embodiments may be employed in other SIM card connectors such as, but not limited to those used in all types of computers, watches, media players and other devices.

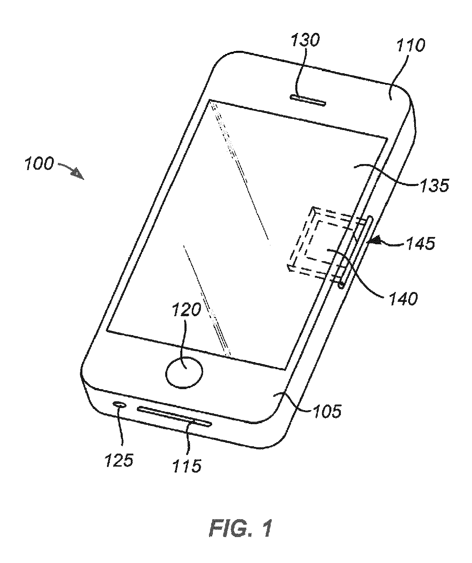

FIG. 1 depicts an illustrative rendering of an electronic device 100 that includes a housing 105 with exterior surface 110 having a receptacle connector 115, a multipurpose button 120 as an input component, one or more microphones 125, one or more speakers 130 and a touch screen display 135 as both an input and output component. Electronic device 100 also has a SIM card 140 within a SIM card connector 145, as described in more detail below. In some embodiments electronic device 100 may function as a cellular telephone and SIM card 140 may be used to authenticate and identify a person on the telephone network.

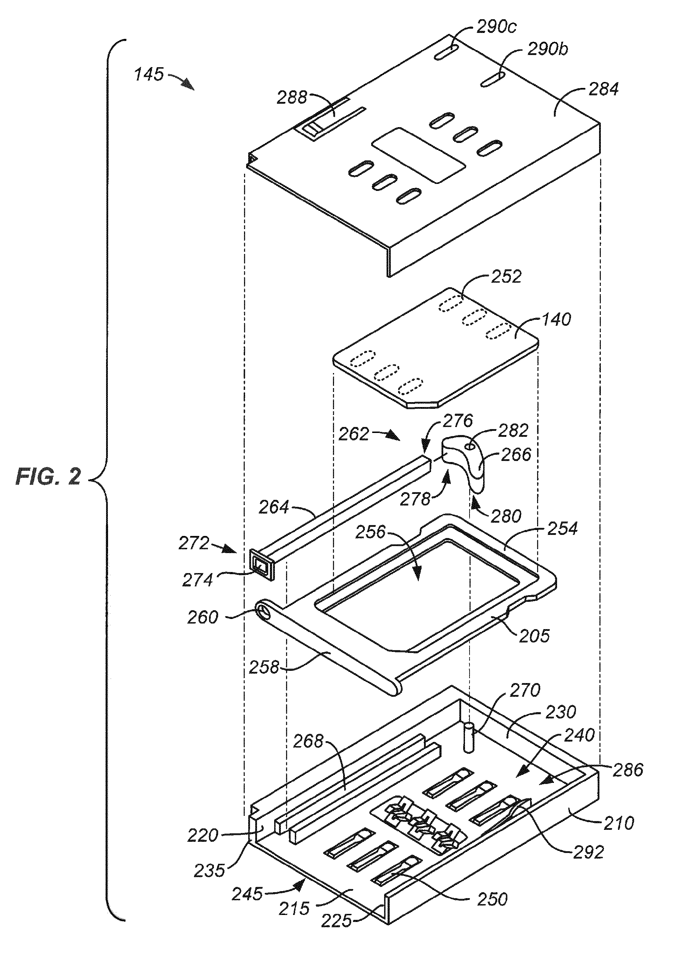

Now referring to FIG. 2, an exploded view of SIM card connector 145, SIM card tray 205 and SIM card 140 is illustrated. In some embodiments SIM card 140 may fit within SIM card tray 205 and be received by SIM card connector 145, as discussed in more detail below.

In various embodiments SIM card connector 145 may have a connector base 210 having a bottom surface 215, first and second opposing sidewalls 220, 225, respectively, and a rear wall 230 extending between the first and second opposing sidewalls. SIM card connector 145 may further have a front face 235 opposite rear wall 230. First and second sidewalls 220, 225, respectively and rear wall 230 may extend from bottom surface 215 to define a recess 240 having a receiving opening 245 at front face 235. In some embodiments recess 240 may be sized and shaped to receive SIM card 140 through receiving opening 245. In various embodiments SIM card 140 may be placed within SIM card tray 205 and received through receiving opening 245, while in some embodiments the SIM card may not have a tray and may be received within the receiving opening. In various embodiments connector base 210 may be made from a plastic material, such as, but not limited to a liquid crystal polymer.

A plurality of electrical contacts 250 may be positioned at bottom surface 215 of connector base 210 in locations such that they make electrical contact with a plurality of SIM card contacts 252 on SIM card 140. In various embodiments plurality of electrical contacts 250 may be insert molded within connector base 210 while in some embodiments they may be retained by the connector base with other means such as a snap fit. In some embodiments plurality of electrical contacts 250 may be made from a metal such as a copper alloy and may be plated with one or more metals such as nickel or gold.

As discussed above, in some embodiments SIM card 140 may be held within SIM card tray 205. SIM card tray 205 may have a frame 254 configured to hold SIM card 140 within opening 256 such that SIM card contacts 252 may be accessible to plurality of electrical contacts 250. SIM card tray 205 may also have a faceplate 258 with an aperture 260, as discussed in more detail below. In some embodiments SIM card tray 205 may be made from a metal such as, but not limited to aluminum or stainless steel. In various embodiments SIM card tray 205 may be made from a plastic.

SIM card connector 145 may have a SIM card tray ejection mechanism 262 contained within SIM card connector 145 and configured to eject SIM card tray 205 when actuated, causing the SIM card tray to protrude out of receiving opening 245 so it can be accessed by a user. In some embodiments SIM card tray ejection mechanism 262 may include a pushrod 264 and an ejector arm 266. Pushrod 264 may be disposed in a slot 268 disposed within connector base 210. Slot 268 may extend from bottom surface 215 into recess 240 and may be positioned adjacent to and along a portion of first sidewall 220. Pushrod 264 may be disposed within slot 268 and may be configured to translate linearly within the slot.

In some embodiments a pin 270 may protrude from bottom surface 215 into recess 240 and ejector arm 266 may be pivotably coupled to pin 270 and configured to be actuated by pushrod 264 to eject SIM card tray 205. In various embodiments pushrod 264 may have an enlarged head portion 272 with a depression 274 disposed adjacent receiving opening 245 and a contact portion 276 disposed at an opposite end and configured to contact ejector arm 266. In some embodiments pushrod 264 may have a head portion 272 that is similar in size to the rest of the pushrod and the head portion may be rounded. In various embodiments pushrod 264 may be fabricated with a metal injection molding (MIM) process using a stainless steel or other metal while in some embodiments it may be made from an injection molded plastic or with another process.

Ejector arm 266 may have a pushrod contact portion 278 opposite a tray ejector portion 280 and a hole 282 disposed in-between. Hole 282 may be configured to pivotably couple ejector arm 266 to connector base 210. In some embodiments hole 282 may be a blind hole while in various embodiments it may be a through hole. In some embodiments ejector arm 266 may have a pin disposed at a mid-portion that is configured to fit within a hole in connector base 210. In various embodiments ejector arm 266 may be made from a metal such as a stainless steel or a plastic material such as a liquid crystal polymer. In some embodiments SIM card ejection mechanism 262 may have a different configuration without departing from the scope of this disclosure.

A cover 284 may be secured to connector base 210 and may be disposed over recess 240 forming a cavity 286 that is sized and shaped to receive SIM card 140 or SIM card tray 205. In further embodiments cover 284 may have one or more spring arms 288 configured to press inward towards cavity 286 and hold pushrod 264 securely in slot 268. Cover 284 may also have one or more depressions 290a, 290b to hold ejector arm 266 on pin 270. More specifically, first depression 290a may be positioned near pushrod contact portion 278 of ejector arm 266 and second depression 290b may be positioned near tray ejector portion 280 the ejector arm. In various embodiments, cover 284 coupled to connector base 210 may form a connector enclosure. In some embodiments cover 284 may be made from a metal such as a copper based alloy or a stainless steel.

In some embodiments a latch 292 within base 210 may be configured to secure SIM card tray 205 within cavity 286 when in a latched position, and SIM card tray ejection mechanism 262 may be configured to eject the SIM card tray from the latched position , as described in more detail below.

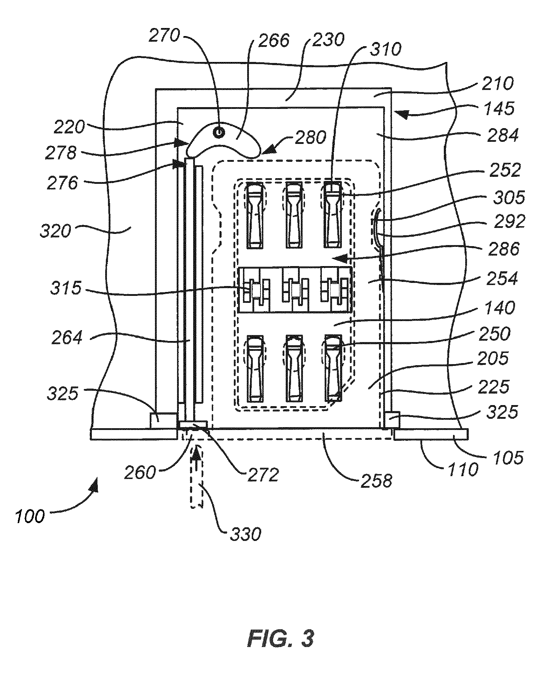

Now referring to FIG. 3, a cross-section through electronic device 100 housing 105 is shown in the region of SIM card connector 145, showing a plan view of SIM card tray 205 in a latched position within the SIM card connector. Cover 284, SIM card tray 205 and SIM card 140 are shown with hidden lines for clarity. As discussed above, in some embodiments latch 292 may protrude from one or more sidewalls 220, 225 of cavity 286 and secure SIM card tray 205 within the cavity by fitting within a depression 305 within SIM card frame 254. In various embodiments latch 292 may be a portion of connector base 210 or may be a separate metallic member secured to the connector base. In some embodiments a different latching mechanism maybe used, such as, for example an overmolded metallic spring or a pair of latches with one latch disposed on each of first and second sidewalls, 220, 225, respectively.

While in the latched position, SIM card tray 205 may hold SIM card 140 in an installed position such that plurality of electrical contacts 250 disposed within cavity 286 make contact with plurality of SIM card contacts 252. While in the latched position, in some embodiments, faceplate 258 of SIM card tray 205 may form a portion of exterior surface 110 of electronic device 100. In various embodiments SIM card tray 205 may be located within an electronic device or within a compartment of the electronic device such as, but not limited to a battery compartment. In some embodiments, plurality of electrical contacts 250 may have a first end 310 configured to make contact with SIM card contacts 252 and a second end 315 configured to couple to a circuit board 320 such that circuitry on the circuit board may communicate with circuitry within SIM card 140. In various embodiments SIM card 140 may contain an integrated circuit chip that securely stores the international mobile subscriber identity (IMSI) number and its related key, which are used to identify and authenticate subscribers on mobile telephony devices. In various embodiments contacts or other information may also be stored on SIM card 140.

As discussed above, in some embodiments SIM card tray ejection mechanism 262 (see FIG. 2) may be fully contained within SIM card connector 145. This may enable both a smaller penetration aperture through housing 105 of electronic device 100 and the ability to seal SIM card connector 145 to the housing to impede moisture ingression into electronic device 100, as discussed in more detail below. In some embodiments housing 105 of electronic device 100 may serve as a primary structural component of the electronic device and as a result the smaller the size of the penetration aperture through the housing for SIM card connector 145 the higher the strength of the housing. In various embodiments, by integrating SIM card tray ejection mechanism 262 (see FIG. 2) within SIM card connector 145, the penetration within housing 105 may only need to be large enough to accommodate SIM card tray 205 sliding into and out of the housing. Thus, additional housing material may not have to be removed as compared to an alternative design that may have an external ejection mechanism that may be placed, for example above or below the SIM card connector.

Further, in some embodiments, by integrating SIM card tray ejection mechanism 262 (see FIG. 2) within SIM card connector 145, the connector enclosure may be substantially sealed since there is no need for an external ejection mechanism to interface with SIM card tray 205 within SIM card connector 145. In some embodiments a gasket 325 may be disposed between SIM card connector 145 and housing 105 of electronic device 100 to seal the SIM card connector to the housing. Although moisture may enter cavity 286 of SIM card connector 145, the cavity may be substantially closed and sealed to housing 105 such that the moisture cannot enter the inside of electronic device 100. This may improve the ability of electronic device 100 to withstand exposure to moisture. In various embodiments gasket 325 may be made from an elastomeric or foam material and may have one or more layers of a pressure sensitive adhesive (PSA).

As discussed above, FIG. 3 illustrates SIM card tray 205 in the installed position where faceplate 258 may be substantially flush with exterior surface 210 of electronic device 100 to provide a substantially continuous and aesthetically pleasing exterior surface. To eject SIM card tray 205, in some embodiments an ejection tool 330 may be positioned outside of electronic device 100 and oriented such that it can penetrate through aperture 260 in faceplate 258 and push on a head portion 272 of pushrod 264 such that the pushrod is linearly translated in a first direction towards rear wall 230. As illustrated in FIG. 2, in some embodiments head portion 272 may have a depression 274 (see FIG. 2) that may assist tool 330 remaining located on the head portion and not sliding off the side when the tool is pushed.

As pushrod 264 is linearly translated towards rear wall 230, contact portion 276 pushes against a pushrod contact portion 278 of ejector arm 266. The force on pushrod contact portion 278 of ejector arm 266 causes the ejector arm to pivot in a clockwise direction about pin 270 and as a result tray ejection portion 280 of the ejector arm moves in a second direction that is away from rear wall 230. As tray ejection portion 280 continues to move away from rear wall 230, it contacts SIM card tray 205 and applies an ejection force in the second direction to the SIM card tray. When the ejection force on SIM card tray 205 overcomes the retention force applied by latch 292, the SIM card tray is ejected.

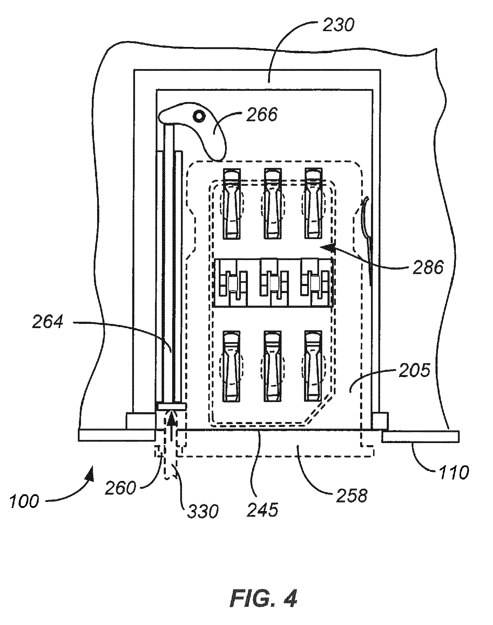

Now referring to FIG. 4, SIM card tray 205 is illustrated in an ejected position. More specifically, pushrod 264 is shown in a second position where it has linearly translated toward rear wall 230. Ejector arm 266 is also shown in a second position where it has rotated in a clockwise direction, forcing SIM card tray 205 to be translated away from rear wall 230. Faceplate 258 of SIM card tray 205 is shown protruding from exterior surface 110 of electronic device 100 so that a user can grasp the SIM card tray and fully remove it from cavity 286. Aperture 260 in face plate 258 allows SIM card tray 205 to translate in an opposite direction of tool 330, such that the tool is pushed through the aperture and the SIM card tray moves in an opposite direction of the tool. A user may install SIM card 140 and SIM card tray 205 by sliding the SIM card tray through receiving opening 245 and pushing it into the receiving opening until latch 292 is engaged.

Although electronic device 100 (see FIG. 1) is described and illustrated as one particular electronic device (i.e., a cellular telephone), embodiments of the invention are suitable for use with a multiplicity of electronic devices. For example, any device that receives or transmits audio, video or data signals may be used with the invention. In some instances, embodiments of the invention are particularly well suited for use with portable electronic media devices including cellular telephony because of their potentially small form factor. As used herein, an electronic media device includes any device with at least one electronic component that may be used to present human-perceivable media. Such devices may include, for example, portable music players (e.g., MP3 devices and Apple's iPod devices), portable video players (e.g., portable DVD players), cellular telephones (e.g., smart telephones such as Apple's iPhone devices), video cameras, digital still cameras, projection systems (e.g., holographic projection systems), gaming systems, PDAs, as well as tablet (e.g., Apple's iPad devices), laptop or other mobile computers. Some of these devices may be configured to provide audio, video or other data or sensory output.

For simplicity, various internal components, such as the control circuitry, graphics circuitry, bus, memory, storage device and other components of electronic device 100 (see FIG. 1) are not shown in the figures.

In the foregoing specification, embodiments of the invention have been described with reference to numerous specific details that may vary from implementation to implementation. The specification and drawings are, accordingly, to be regarded in an illustrative rather than a restrictive sense. The sole and exclusive indicator of the scope of the invention, and what is intended by the applicants to be the scope of the invention, is the literal and equivalent scope of the set of claims that issue from this application, in the specific form in which such claims issue, including any subsequent correction. The specific details of particular embodiments may be combined in any suitable manner without departing from the spirit and scope of embodiments of the invention.

Additionally, spatially relative terms, such as "bottom or "top" and the like may be used to describe an element and/or feature's relationship to another element(s) and/or feature(s) as, for example, illustrated in the figures. It will be understood that the spatially relative terms are intended to encompass different orientations of the device in use and/or operation in addition to the orientation depicted in the figures. For example, if the device in the figures is turned over, elements described as a "bottom" surface may then be oriented "above" other elements or features. The device may be otherwise oriented (e.g., rotated 90 degrees or at other orientations) and the spatially relative descriptors used herein interpreted accordingly.

## Claims

1. A SIM card connector comprising:
a connector base having a bottom surface, first and second opposing sidewalls, a rear wall extending between the first and second opposing sidewalls, the first and second sidewalls and rear wall extending from the bottom surface to define a recess;
a cover coupled the connector base and disposed over the recess thereby defining a receiving opening sized and shaped to receive a SIM card;
a plurality of electrical contacts configured to make contact with the SIM card;
a slot disposed adjacent to and along a portion of the first sidewall;
a pushrod disposed within the slot; and
an ejector arm pivotably coupled to the connector base and configured to be actuated by the pushrod to eject the SIM card.

2. The SIM card connector of claim 1 wherein the SIM card is held within a tray that is received through the receiving opening.

3. The SIM card connector of claim 2 wherein the SIM card has a plurality of SIM card contacts that are configured to be coupled to the plurality of electrical contacts when the tray is in a latched position within the recess.

4. The SIM card connector of claim 1 wherein the plurality of electrical contacts are disposed in the bottom surface of the connector base and have a first end configured to make contact with the SIM card and a second end configured to couple to a circuit board.

5. The SIM card connector of claim 1 the pushrod has a head portion disposed adjacent the receiving opening and a contact portion disposed at an opposite end and configured to contact the ejector arm.

6. The SIM card connector of claim 1 wherein the pushrod is disposed in a slot extending from the bottom surface of the connector base into the recess.

7. The SIM card connector of claim 1 wherein the receiving opening is disposed within a front face of the connector base and the front face is configured to mate to a housing of an electronic device with a gasket such that a seal is formed between the connector and the housing of the electronic device.

8. The SIM card connector of claim 1 wherein the cover has spring arm configured to hold the pushrod in the slot.

9. The SIM card connector of claim 1 wherein the cover has one or more depressions to hold the ejector arm on the pin.

10. An integrated electrical connector assembly for forming electrical connections to a card, the connector assembly comprising:
a connector enclosure having a receiving opening that communicates with a cavity formed to receive a tray configured to hold the card;
a plurality of electrical contacts configured to make a plurality of electrical connections between the card and an external circuit board;
a pushrod disposed adjacent to the cavity and configured to linearly translate parallel to the cavity; and
an ejector arm disposed within the housing and configured to work in conjunction with the pushrod such that when the pushrod is translated in a first direction it contacts the ejector arm causing the ejector arm to rotate and eject the card out of the receiving opening.

11. The integrated electrical connector of claim 10 wherein the card is a SIM card that is held within a tray that is received within the cavity.

12. The integrated electrical connector of claim 10 wherein the ejector arm has a pushrod contact portion opposite a tray ejector portion and a hole disposed in-between, the hole configured to pivotably couple the ejector arm to the connector enclosure.

13. The integrated electrical connector of claim 10 wherein the connector enclosure is configured to mate to a housing of an electronic device with a gasket such that a seal is formed between the connector and the housing of the electronic device.

14. A SIM card connector comprising:
a connector enclosure having a receiving opening that communicates with a cavity formed to receive a tray;
a latch within the connector enclosure configured to secure the tray within the cavity when in a latched position;
a plurality of electrical contacts disposed within the cavity and configured to make contact with a plurality of SIM card contacts when a SIM card is in the tray and the tray is in the latched position; and
a tray ejection mechanism contained within the connector enclosure and configured to eject the tray when actuated causing the tray to protrude out of the receiving opening.

15. The SIM card connector of claim 14 wherein the tray ejection mechanism comprises a pushrod disposed in a slot that is parallel with the cavity and an ejector arm that is pivotably coupled to the connector enclosure such that when the pushrod is linearly translated in a first direction the pushrod hits the ejection arm causing the tray to be ejected.
